# EUROPEAN PATENT SPECIFICATION

(11) **EP 3 323 863 B1**
(45) Date of publication and mention of the grant of the patent: **17.06.2020**
(21) Application number: 16824444.0
(22) Date of filing: 11.07.2016
(51) Int. Cl.: C09D 11/38, B41J 2/01, B41M 5/00, C09D 11/101, C09D 11/34

(54) **ACTIVE LIGHT RAY-CURABLE INKJET INK AND INKJET RECORDING METHOD**
AKTIVE LICHTSTRAHLHÄRTBARE TINTENSTRAHLTINTE UND TINTENSTRAHLAUFZEICHNUNGSVERFAHREN
ENCRE POUR JET D'ENCRE DURCISSABLE PAR RAYONS DE LUMIÈRE ACTIVE ET PROCÉDÉ D'ENREGISTREMENT PAR JET D'ENCRE

(30) Priority: 13.07.2015 JP 2015139702
(43) Date of publication of application: 23.05.2018
(73) Proprietor: Konica Minolta, Inc., Tokyo 100-7015 (JP)
(72) Inventor: YAMAGUCHI, Go, Tokyo 100-7015 (JP); MIYANO, Masashi, Tokyo 100-7015 (JP)
(74) Representative: Henkel & Partner mbB
(86) International application number: PCT/JP2016/070469
(87) International publication number: WO 2017/010464

(56) References cited:
- EP-A1- 2 684 876
- EP-A1- 3 257 907
- WO-A1-2010/133381
- WO-A1-2012/114759
- JP-A- 2013 226 745
- JP-A- 2013 226 745
- JP-A- 2014 070 103
- JP-A- 2014 070 104

## Description

### Technical Field

The present invention relates to an actinic radiation-curable inkjet ink and an inkjet recording method.

### Background Art

An inkjet recording method is applicable to high-mix, low-volume production, and thus employed in various printing fields. As a type of inkjet recording method, there exists an actinic radiation cure-type inkjet recording method, which performs recording of images composed of cured films by impacting droplets of inkjet inks on a recording medium, and then curing the inkjet inks by irradiation with actinic radiation to form the cured films. Such an actinic radiation cure-type inkjet recording method has drawn attention recently, since the method exhibits high adhesion when an inkjet ink is applied to a non-absorbing recording medium therefor. An actinic radiation-curable inkjet ink typically contains a photocurable compound, a photoinitiator, and a colorant, for example.

Recorded articles obtained through such an actinic radiation cure-type inkjet recording method, however, have a problem in which the unreacted photocurable compound, the unreacted photoinitiator, and a residue, such as the photoinitiator after a reaction, for example, are migrated from cured films of actinic radiation-curable inkjet inks.

Particularly, when the method is employed for package recording, such as food packaging, special consideration must be taken since there are by-laws and voluntary regulations that regulate, from a safety perspective, the amount of migration of the unreacted photocurable compound, the unreacted photoinitiator, and a residue, such as the photoinitiator after a reaction, for example.

As a technique to reduce the amount of migration, there is known a method in which an actinic radiation-curable inkjet ink containing a photoinitiator having a photocurable group is impacted on a recording medium, and then cured by irradiation with actinic radiation under nitrogen atmosphere (see Patent Literature (hereinafter, abbreviated as PTL) 1 to 4).

### Citation List

### Patent Literature

PTL 1 Japanese Patent Application Laid-Open No. 2014-070103
PTL 2 Japanese Patent Application Laid-Open No. 2014-070104
PTL 3 U.S. Patent No. 8883873
PTL 4 EP Patent No. 2684876

### Summary of Invention

### Technical Problem

The method disclosed in PTLs 1 to 4, however, requires a dedicated apparatus for creating nitrogen atmosphere, and thus results in an increasing cost for image formation and a growing size of a printing system. Accordingly, a technique to reduce the amount of migration even in the air is needed. The above technique for reducing the amount of migration, in which curing of an actinic radiation-curable inkjet ink is performed under nitrogen atmosphere in each case, is found to fail to reduce the amount of migration satisfactorily when curing is performed in the air. Although the details are unknown, the extensive study by the present inventors has revealed that there is a problem in which a photoinitiator having a photocurable group terminates a reaction more readily before copolymerization with a photocurable compound, compared with a photocurable group-free photoinitiator. Especially in the air, a termination reaction is found to occur more readily since a photopolymerization reaction tends to be inhibited on an ink surface due to oxygen in the air, coupled with the fact that an intramolecular reaction progresses during the above-mentioned light irradiation. Accordingly, it is found that a problem is that surface curability of an ink is not enhanced particularly, and a residual amount of the photoinitiator having a photocurable group un-copolymerized with a photocurable compound and/or the unreacted photocurable compound increases, thereby increasing the amount of migration.

Further, a photoinitiator having a photocurable group is structurally unstable due to its photocurable group and photoinitiation portion in the molecule. Accordingly, the photoinitiator is found to undergo an intramolecular reaction during long-term storage of an ink at room temperature and terminate the reaction. Accordingly, it is found that curability of an ink after long-term storage of the ink deteriorates and the amount of migration increases.

The present invention has been achieved in light of the above problems, and an object of the present invention is to provide an actinic radiation-curable inkjet ink and an inkjet recording method that reduce the amount of migration and exhibit good surface curability.

### Solution to Problem

The above-mentioned objects according to the present invention are achieved by the following means.

[1] An actinic radiation-curable inkjet ink contains a photocurable compound and a photoinitiator, in which: the photoinitiator includes a photoinitiator having a photocurable group; and the actinic radiation-curable inkjet ink further comprises a gelling agent thereby undergoes sol-gel phase transition.
[2] The actinic radiation-curable inkjet ink according to [1], in which the photoinitiator having a photocurable group includes a thioxanthone compound or a benzophenone compound.
[3] The actinic radiation-curable inkjet ink according to [1] or [2], in which the gelling agent includes a compound represented by general formula G1 or a compound represented by general formula G2;

   General Formula G1 R1-CO-R2

   General Formula G2 R3-COO-R4

   where R1, R2, R3, and R4 are each independently a hydrocarbon group containing a C₉₋₂₅ linear or branched portion.
[4] The actinic radiation-curable inkjet ink according to any one of [1] to [3], in which the photocurable compound substantially consists of a polyfunctional photocurable compound.
[5] The actinic radiation-curable inkjet ink according to any one of [1] to [4], in which a content of the gelling agent is 10% by mass or more and less than 75% by mass, based on the total mass of the photoinitiator having a photocurable group.
[6] An inkjet recording method, in which recording is performed using the actinic radiation-curable inkjet ink according to any one of [1] to [5].

### Advantageous Effects of Invention

The present invention provides an actinic radiation-curable inkjet ink and an inkjet recording method that reduce the amount of migration and exhibit good surface curability.

### Brief Description of Drawings

FIG. 1A is a side view illustrating an example configuration of the main part of a line recording-mode inkjet recording apparatus, which is an embodiment of inkjet recording apparatuses in which an actinic radiation-curable inkjet ink of the present invention is used;
FIG. 1B is a top view illustrating the example configuration of the main part of the line recording-mode inkjet recording apparatus, which is an embodiment of inkjet recording apparatuses in which the actinic radiation-curable inkjet ink of the present invention is used; and
FIG. 2 is a top view illustrating an example configuration of the main part of a serial recording-mode inkjet recording apparatus in which the actinic radiation-curable inkjet ink of the present invention is used.

### Description of Embodiments

The actinic radiation-curable inkjet ink of the present invention is an actinic radiation-curable inkjet ink containing a photocurable compound and a photoinitiator, in which the photoinitiator includes a photoinitiator having a photocurable group, and the actinic radiation-curable inkjet ink contains a gelling agent thereby undergoes sol-gel phase transition.

By employing a photoinitiator having a photocurable group as a photoinitiator, which is a source of migration, a photocurable compound and the initiator can be copolymerized, thereby achieving effective reduction of the amount of migration.

Further, the extensive study by the present inventors has revealed that incorporation of a gelling agent into an actinic radiation-curable inkjet ink has remarkable effects on the reduction in the amount of migration. Although the details are unclear, such a gelling agent presumably crystallizes upon impact of the actinic radiation-curable inkjet ink on a recording medium to form a card house structure. The card house structure presumably functions as a filter in a cured film after irradiation with actinic radiation and blocks the movement of sources of migration, such as the unreacted photocurable compound, the unreacted photoinitiator, and a residue, such as the photoinitiator after a reaction, thereby suppressing migration.

A crystal structure created by the gelling agent increases the viscosity of the actinic radiation-curable inkjet ink, thereby suppressing oxygen inhibition on the surface of the actinic radiation-curable inkjet ink. Accordingly, even if the actinic radiation-curable inkjet ink contains a photoinitiator having a photocurable group, surface curability of the ink is enhanced and a migration rate of the unreacted photocurable compound and the unreacted photoinitiator, for example, from the ink surface is lowered. Consequently, the amount of migration resulting from the ink surface can presumably be reduced.

Further, the gelling agent crystallizes at room temperature and thus the viscosity of the actinic radiation-curable inkjet ink is high. Accordingly, during the storage of the ink, the molecular motion of the photoinitiator having a photocurable group is suppressed, and an intramolecular reaction of the photoinitiator having a photocurable group is less likely to progress. Therefore, it is believed that good surface curability is achieved and the amount of migration is reduced even after the long-term storage of the ink at room temperature.

In the following, the present invention, essential components thereof, and embodiments thereof will be described in detail. As used herein, the term "to" in a numerical range is used to include numerical values before and after the term as the lower limit and the upper limit. Further, "% by mass" herein refers to a content of each component in % by mass, relative to 100% by mass of the total mass of an ink unless otherwise indicated.

### [Actinic Radiation-curable Inkjet Inks]

An actinic radiation-curable inkjet ink of the present invention is an actinic radiation-curable ink composition. "Actinic radiation" refers to light rays that can apply energy for generating initiating species in an ink composition by irradiation therewith, and includes α rays, γ rays, X-rays, UV rays, and electron beams, for example. Among them, in view of curing sensitivity and availability of apparatuses, UV rays and electron beams are preferred, and UV rays are more preferred.

In the following, various component compounds and the like of the actinic radiation-curable inkjet ink of the present invention will be described in detail.

### [Gelling Agents]

The actinic radiation-curable inkjet ink of the present invention contains a gelling agent. As used herein, a gelling agent is defined as "an organic substance that is solid at room temperature and becomes liquid upon heating, and functions to cause an ink to undergo temperature-dependent reversible sol-gel phase transition."

When a gelling agent crystallizes in an ink, a space three-dimensionally surrounded by crystals, which are crystallized gelling agent, is formed. The structure thus formed is sometimes called "card house structure." The card house structure can retain the unreacted photocurable compound, the unreacted photoinitiator, and a residue, such as the photoinitiator after a reaction, for example, and further enables pinning of ink droplets. Accordingly, coalescence of adjacent ink droplets can be suppressed. In order to form a card house structure, a photocurable compound and a gelling agent, both of which are dissolved in an ink, are preferably compatible with each other.

For stable discharge of ink droplets from an inkjet recording apparatus, good compatibility between a photocurable compound and a gelling agent is preferred in a sol-state ink (at a high temperature, about 80°C, for example).

Examples of the gelling agents include aliphatic ketone compounds; aliphatic ester compounds; petroleum waxes, such as paraffin wax, microcrystalline wax, and petrolatum; plant-derived waxes, such as Candelilla wax, carnauba wax, rice bran wax, Japan wax, jojoba oil, solid jojoba wax, and jojoba esters; animal-derived waxes, such as beeswax, lanolin, and spermaceti; mineral waxes, such as montan wax and a hydrogenated wax; hydrogenated castor oil or hydrogenated castor oil derivatives; modified waxes, such as montan wax derivatives, paraffin wax derivatives, microcrystalline wax derivatives, and polyethylene wax derivatives; higher fatty acids, such as behenic acid, arachidic acid, stearic acid, palmitic acid, myristic acid, lauric acid, oleic acid, and erucic acid; higher alcohols, such as stearyl alcohol and behenyl alcohol; hydroxystearic acid, such as 12-hydroxystearic acid; 12-hydroxystearic acid derivatives; fatty acid amides, such as lauramide, stearamide, behenamide, oleamide, erucamide, ricinoleamide, and 12-hydroxystearamide (for example, NIKKA AMIDE series from Nippon Kasei Chemical Co., Ltd., ITOHWAX series from ITOH OIL CHEMICALS CO., LTD., and FATTY AMIDE series from Kao Corporation); N-substituted fatty acid amides, such as N-stearyl stearamide, and N-oleyl palmitamide; specialty fatty acid amides, such as N,N'-ethylenebis(stearamide), N,N'-ethylenebis(12-hydroxystearamide), and N,N'-xylylenebis(stearamide); higher amines, such as dodecylamine, tetradecylamine, and octadecylamine; fatty acid esters, such as stearyl stearate, oleyl palmitate, glycerol fatty acid esters, sorbitan fatty acid esters, propylene glycol fatty acid esters, ethylene glycol fatty acid esters, and polyoxyethylene fatty acid esters (for example, EMALEX series from Nihon Emulsion Co., Ltd., Rikemal series from RIKEN VITAMIN Co., Ltd., and POEM series from RIKEN VITAMIN Co., Ltd.); sucrose fatty acid esters, such as sucrose stearate and sucrose palmitate (for example, RYOTO Sugar Ester series from Mitsubishi-Chemical Foods Corporation); synthetic waxes, such as polyethylene wax and α-olefin-maleic anhydride copolymer wax (UNILIN series from Baker Petrolite); a dimer acid; a dimer diol (for example, Pripol series from Croda International Plc); inulin fatty acid esters, such as stearoyl inulin; dextrin fatty acid esters, such as dextrin palmitate and dextrin myristate (for example, Rheopearl series, from Chiba Flour Milling Co., Ltd.); glyceryl behenate/eicosadioate; polyglyceryl behenate/eicosadioate (for example, NOMCORT series from The Nisshin OilliO Group, Ltd.); amide compounds, such as N-lauroyl-L-glutamic acid dibutylamide and N-(2-ethylhexanoyl)-L-glutamic acid dibutylamide (available from Ajinomoto Fine-Techno Co., Inc.); dibenzylidene sorbitol derivatives, such as 1,3:2,4-bis-O-(benzylidene)-D-glucitol (GEL ALL D available from New Japan Chemical Co., Ltd.); and low-molecular oil gelling agents described in Japanese Patent Application Laid-Open No. 2005-126507, Japanese Patent Application Laid-Open No. 2005-255821, and Japanese Patent Application Laid-Open No. 2010-111790.

The gelling agent preferably contains a C₉₋₂₅ linear hydrocarbon group. A gelling agent containing a C₉₋₂₅ linear hydrocarbon group tends to form the above-mentioned "card house structure." The gelling agent may contain a branched chain in the structure.

Specific examples of the gelling agents containing a C₉₋₂₅ linear hydrocarbon group include C₉₋₂₅ linear hydrocarbon group-containing aliphatic ketone compounds, aliphatic ester compounds, higher fatty acids, higher alcohols, and fatty acid amides.

From a viewpoint of enhancing surface curability of an ink, the gelling agent is preferably an aliphatic ketone compound or an aliphatic ester compound. In other words, a compound represented by general formula G1 or G2 is preferred.

General Formula G1: R1-CO-R2

General Formula G2: R3-COO-R4

In general formulae G1 and G2, R1, R2, R3, and R4 are preferably each independently a hydrocarbon group having a C₉₋₂₅ linear or branched portion.

In general formula G1, hydrocarbon groups represented by R1 and R2 are preferably, but not particularly limited to, a hydrocarbon group having a C₉₋₂₅ linear portion.

Examples of the aliphatic ketone compounds represented by general formula G1 include 18-pentatriacontanone (C17-C17), dilignoceryl ketone (C24-C24), dibehenyl ketone (C22-C22), distearyl ketone (C18-C18), dieicosyl ketone (C20-C20), dipalmityl ketone (C16-C16), dimyristyl ketone (C14-C14), dilauryl ketone (C12-C12), lauryl myristyl ketone (C12-C14), lauryl palmityl ketone (C12-C16), myristyl palmityl ketone (C14-C16), myristyl stearyl ketone (C14-C18), myristyl behenyl ketone (C14-C22), palmityl stearyl ketone (C16-C18), palmityl behenyl ketone (C16-C22), and stearyl behenyl ketone (C18-C22).

Examples of commercially available compounds represented by general formula G1 include 18-pentatriacontanone (from Alfa Aesar), hentriacontan-16-one (from Alfa Aesar), and KAOWAX T1 (from Kao Corporation). The aliphatic ketone compound contained in an ink may be one compound or a mixture of two or more compounds.

In general formula G2, hydrocarbon groups represented by R3 and R4 are preferably, but not particularly limited to, a hydrocarbon group having a C₉₋₂₅ linear portion.

Examples of the aliphatic ester compounds represented by general formula G2 include behenyl behenate (C21-C22), icosyl icosanoate (C19-C20), stearyl stearate (C17-C18), palmityl stearate (C17-16), lauryl stearate (C17-C12), cetyl palmitate (C15-C16), stearyl palmitate (C15-C18), myristyl myristate (C13-C14), cetyl myristate (C13-C16), octyldodecyl myristate (C13-C20), stearyl oleate (C17-C18), stearyl erucate (C21-C18), stearyl linolate (C17-C18), behenyl oleate (C18-C22), myricyl cerotate (C25-C16), and arachidyl linolate (C17-C20).

Examples of commercially available aliphatic ester compounds represented by general formula G2 include UNISTER M-2222SL (from NOF Corporation), UNISTER M-9796 (from NOF Corporation), EXCEPARL SS (from Kao Corporation), EMALEX CC-18 (from Nihon Emulsion Co., Ltd.), AMREPS PC (from KOKYU ALCOHOL KOGYO CO., LTD.), EXCEPARL MY-M (from Kao Corporation), spermaceti (from NOF Corporation), and EMALEX CC-10 (from Nihon Emulsion Co., Ltd.). These commercially available products are often mixtures of two or more substances, and thus may be subjected to separation/purification as needed.

The gelling agent contained in an ink may be a mixture of two or more substances. More suitable examples of the mixture include a mixture of gelling agents selected from the compounds shown in Table 1.

**[Table 1]**

| Type | Name | Product Name | Manufacturer |
|---|---|---|---|
| Aliphatic Ketone Compound (G1) | Distearyl ketone | KAOWAX T1 | Kao Corporation |
| | Stearone | 18-Pentatriacontanone | Reagent (Alfa Aesar) |
| | Dipalmityl ketone | Hentriacontan-16-one | Reagent (Alfa Aesar) |
| | Dilauryl ketone | 12-Tricosanone | Reagent (Alfa Aesar) |
| Aliphatic Ester Compound (G2) | Stearyl stearate | EXCEPARL SS | Kao Corporation |
| | | UNISTER M-9676 | NOF Corporation |
| | | EMALEX CC-18 | Nihon Emulsion Co., Ltd. |
| | | AMREPS SS | KOKYU ALCOHOL KOGYO CO., LTD. |
| | Cetyl palmitate | AMREPS PC | KOKYU ALCOHOL KOGYO CO., LTD. |
| | Behenyl behenate | UNISTER M-2222SL | NOF Corporation |

The content of the gelling agent in an ink of the present invention is preferably 0.5% by mass or more and 10% by mass or less, more preferably 1% by mass or more and 5% by mass or less.

From a viewpoint of reducing the amount of migration, the content of the gelling agent is preferably 10% by mass or more and less than 75% by mass, based on the total mass of a photoinitiator having a photocurable group.

When two or more gelling agents are used together, it is preferred to adjust an addition ratio of each gelling agent to 5% by mass or more and less than 95% by mass, more preferably 20% by mass or more and less than 80% by mass, based on the total mass of the gelling agents.

### [Photocurable Compounds]

A photocurable compound is a compound that crosslinks or polymerizes upon irradiation with actinic radiation.

The photocurable compound can be a radical polymerizable compound or a cationic polymerizable compound, and preferably a radical polymerizable compound.

A radical polymerizable compound is a compound having a radical polymerizable ethylenic unsaturated bond (monomer, oligomer, polymer, or mixture thereof). Only one or two or more radical polymerizable compounds may be contained in an ink.

Examples of the compounds having a radical polymerizable ethylenic unsaturated bond include unsaturated carboxylic acids and salts thereof, unsaturated carboxylic acid ester compounds, unsaturated carboxylic acid urethane compounds, unsaturated carboxylic acid amide compounds and anhydrides thereof, acrylonitrile, styrene, unsaturated polyesters, unsaturated polyethers, unsaturated polyamides, and unsaturated urethanes. Examples of the unsaturated carboxylic acids include (meth)acrylic acid, itaconic acid, crotonic acid, isocrotonic acid, and maleic acid.

Among them, the radical polymerizable compound is preferably an unsaturated carboxylic acid ester compound, and more preferably a (meth)acrylate. The (meth)acrylate may be not only a monomer described hereinafter, but also an oligomer, a mixture of a monomer and an oligomer, a modified compound, or an oligomer having a photocurable functional group, for example.

As used herein, the term "(meth)acrylate" encompasses an acrylate monomer, an acrylate oligomer, a methacrylate monomer, and a methacrylate oligomer.

Examples of the (meth)acrylates include bifunctional monomers, such as triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethyloltricyclodecane di(meth)acrylate, bisphenol A-PO adduct di(meth)acrylate, neopentyl glycol hydroxypivalate di(meth)acrylate, polytetramethylene glycol di(meth)acrylate, polyethylene glycol diacrylate, and tripropylene glycol diacrylate; and tri- or higher-functionality monomers, such as trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, propoxylated glycerol tri(meth)acrylate, and ethoxylated pentaerythritol tetra(meth)acrylate.

In view of photosensitivity and the like, the (meth)acrylate is preferably stearyl (meth)acrylate, lauryl (meth)acrylate, isostearyl (meth)acrylate, diethylene glycol ethyl ether (meth)acrylate, isobornyl (meth)acrylate, tetraethylene glycol di(meth)acrylate, or propoxylated glycerol tri(meth)acrylate, for example.

The (meth)acrylate may be a modified compound. Examples of the modified compounds include ethylene oxide-modified (meth)acrylates, such as ethylene oxide-modified trimethylolpropane tri(meth)acrylate and ethylene oxide-modified pentaerythritol tetra(meth)acrylate; caprolactone-modified (meth)acrylates, such as caprolactone-modified trimethylolpropane tri(meth)acrylate; and caprolactam-modified (meth)acrylates, such as caprolactam-modified dipentaerythritol hexa(meth)acrylate.

In an actinic radiation-curable inkjet ink, the photocurable compound is preferably at least partially an ethylene oxide-modified (meth)acrylate. Such an ethylene oxide-modified (meth)acrylate exhibits high photosensitivity, and consequently an ink readily forms a card house structure during gelation at a low temperature. Further, the ethylene oxide-modified (meth)acrylate readily dissolve in other ink components at a high temperature and exhibits low curing shrinkage, and consequently curling of printed articles is suppressed.

Examples of the ethylene oxide-modified (meth)acrylates include 4EO-modified hexanediol diacrylate (CD 561), 3EO-modified trimethylolpropane triacrylate (SR 454), 6EO-modified trimethylolpropane triacrylate (SR 499), 4EO-modified pentaerythritol tetraacrylate (SR 494) (from Sartomer); polyethylene glycol diacrylate (NK Ester A-400), polyethylene glycol diacrylate (NK Ester A-600), polyethylene glycol dimethacrylate (NK Ester 9G), polyethylene glycol dimethacrylate (NK Ester 14G) (from Shin-Nakamura Chemical Co., Ltd.); tetraethylene glycol diacrylate (V#335HP) (from Osaka Organic Chemical Industry, Ltd.); 3PO-modified trimethylolpropane triacrylate (Photomer 4072) (from Cognis Holding GmbH); 1,10-decanediol dimethacrylate (NK Ester DOD-N), tricyclodecanedimethanol diacrylate (NK Ester A-DCP), and tricyclodecanedimethanol dimethacrylate (NK Ester DCP) (from Shin-Nakamura Chemical Co., Ltd.).

The (meth)acrylate may be an oligomer. Examples of the oligomers include an epoxy (meth)acrylate oligomer, an aliphatic urethane (meth)acrylate oligomer, an aromatic urethane (meth)acrylate oligomer, a polyester (meth)acrylate oligomer, and a linear (meth)acrylic oligomer.

The cationic polymerizable compound can be an epoxy compound, a vinyl ether compound, and an oxetane compound, for example. Only one or two or more cationic polymerizable compounds may be contained in an actinic radiation-curable inkjet ink.

The epoxy compound is, for example, an aromatic epoxide, an alicyclic epoxide, or an aliphatic epoxide, and preferably an aromatic epoxide or an alicyclic epoxide in order to enhance curability.

The aromatic epoxide can be a di- or polyglycidyl ether obtained by reacting a polyhydric phenol or an alkylene oxide adduct thereof, and epichlorohydrin. Examples of the reactant polyhydric phenols or alkylene oxide adducts thereof include bisphenol A or an alkylene oxide adduct thereof. The alkylene oxide of the alkylene oxide adduct can be ethylene oxide or propylene oxide, for example.

The alicyclic epoxide can be a cycloalkane oxide-containing compound obtained by epoxidizing a cycloalkane-containing compound with an oxidizing agent, such as hydrogen peroxide or a peroxy acid. The cycloalkane of the cycloalkane oxide-containing compound can be cyclohexene or cyclopentene.

The aliphatic epoxide can be a di- or polyglycidyl ether obtained by reacting an aliphatic polyhydric alcohol or an alkylene oxide adduct thereof, and epichlorohydrin. Examples of the aliphatic polyhydric alcohols include alkylene glycols, such as ethylene glycol, propylene glycol, and 1,6-hexanediol. The alkylene oxide of the alkylene oxide adduct can be ethylene oxide or propylene oxide, for example.

Examples of the vinyl ether compounds include di- or trivinyl ether compounds, such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether.

It is preferred that the photocurable compound contained in the actinic radiation-curable inkjet ink of the present invention substantially consists of a polyfunctional photocurable compound. As used herein, the term "polyfunctional photocurable compound" refers to a photocurable compound having two or more photocurable functional groups. As used herein, the term "substantially" means that a content of a photocurable compound having only one photocurable functional group (also referred to as monofunctional photocurable compound) is 0% by mass or more and less than 5.0% by mass, based on the total mass of the actinic radiation-curable inkjet ink.The content of the monofunctional photocurable compound is preferably less than 5.0% by mass, more preferably less than 1.0% by mass, and further preferably less than 0.1% by mass, based on the total mass of the actinic radiation-curable inkjet ink, from a viewpoint of reducing the amount of migration.

A high content of the polyfunctional photocurable compound can prevent residual unreacted photocurable compound and/or unreacted photoinitiator due to enhanced reaction efficiency of the photocurable compound. Moreover, enhanced reaction efficiency of the photocurable compound can lower a proportion of the unreacted photocurable compound and suppress bleeding out of the unreacted photocurable compound onto the ink surface, thereby reducing the amount of migration. Further, a high content of the polyfunctional photocurable compound results in the formation of a crosslinked structure of the photocurable compound through curing, as well as blocking of the movement of the unreacted photocurable compound, the unreacted photoinitiator, and a residue, such as the photoinitiator after a reaction, for example. Consequently, the amount of migration is reduced.

The content of the photocurable compound may be in a range in which the advantages of the present invention can be obtained, and can be, for example, 1% by mass or more and 97% by mass or less, based on the total mass of the inkjet ink. In the above viewpoint, the content of the photocurable compound is preferably 30% by mass or more and 95% by mass or less, based on the total mass of the inkjet ink.

### [Photoinitiators]

### (Photoinitiator having Photocurable Group)

The actinic radiation-curable inkjet ink of the present invention contains a photoinitiator, and the photoinitiator includes a photoinitiator having a photocurable group.Only one or two or more photoinitiators may be contained in the inkjet ink. The photoinitiator having a photocurable group is a photoinitiator having at least one photocurable group in a molecule. The photocurable group can be a (meth)acrylic group. In view of curability, the photoinitiator having a photocurable group preferably includes two or more and five or less photocurable groups in a molecule.

Since the photoinitiator having a photocurable group is contained in the actinic radiation-curable inkjet ink of the present invention, the photoinitiator, which is a source of migration, can be copolymerized with the photocurable compound, thereby reducing the amount of migration. Further, when the photoinitiator having a photocurable group is used together with a gelling agent, a crystal structure created by the gelling agent increases the viscosity of the actinic radiation-curable inkjet ink, and thus suppresses oxygen inhibition during curing. Accordingly, even if the actinic radiation-curable inkjet ink contains the photoinitiator having a photocurable group, it is considered that surface curability of the ink is enhanced and a proportion of the unreacted photocurable compound and the unreacted photoinitiator, for example, on the ink surface is decreased, thereby reducing the amount of migration resulting from the ink surface. Further, at room temperature, the gelling agent crystallizes and thus the viscosity of the actinic radiation-curable inkjet ink is high. Accordingly, during the storage of the ink, the molecular motion of the photoinitiator having a photocurable group is suppressed, and thus an intramolecular reaction of the photoinitiator having a photocurable group is less likely to progress. Therefore, it is believed that good surface curability is achieved and the amount of migration is reduced even after long-term storage of the ink at room temperature.

The photoinitiator is classified into an intramolecular cleavage type and a hydrogen abstraction type. Examples of the intramolecular cleavage-type photoinitiators include an α-hydroxy ketone compound, an acylphosphine compound, and an α-amino ketone compound, for example. Examples of the hydrogen abstraction-type photoinitiators include a benzophenone compound and a thioxanthone compound. In view of surface curability of an ink, the intramolecular cleavage-type photoinitiator and the hydrogen abstraction-type photoinitiator are preferably used together. The benzophenone compound and the thioxanthone compound as the hydrogen abstraction-type photoinitiator are more difficult to reduce the amount of migration, compared with the intramolecular cleavage-type photoinitiator in some cases. Incorporation of a photocurable group into the intramolecular cleavage-type photoinitiator, however, can reduce the amount of migration more effectively.

### < Intramolecular Cleavage-type Photoinitiator having Photocurable Group >

The intramolecular cleavage-type photoinitiator having a photocurable group is not particularly limited, and is any intramolecular cleavage-type photoinitiator having a photocurable group. The examples include compounds described in paragraphs [0030] to [0032] of PTL 1, paragraphs [0033] and [0034] of PTL 2, and pages 15 and 16 of PTL 3.In the present specification, the specifications of PTL 1, PTL 2, and PTL 3 can be referred to.

### < Hydrogen Abstraction-type Photoinitiator having Photocurable Group >

The hydrogen abstraction-type photoinitiator having a photocurable group is not particularly limited, and is any photoinitiator that is a hydrogen abstraction-type and has a photocurable group. The examples include TX1 to TX20 shown in Table 1 of PTL 4 and compounds described on pages 5 and 6 of PTL 3. In the present specification, the specifications of PTL 3 and PTL 4 can be referred to.

### (Other Photoinitiators)

Provided that the advantages of the present invention can be obtained, another photoinitiator, in addition to the photoinitiator having a photocurable group, may also be contained. Examples of intramolecular cleavage-type photoinitiators include an α-hydroxy ketone compound, an acylphosphine compound, and α-amino ketone compound. Examples of hydrogen abstraction-type photoinitiators include a benzophenone compound and a thioxanthone compound.

### < Acylphosphine Compounds >

Examples of the acylphosphine compounds include benzoin derivatives, such as benzoin, benzoin methyl ether, and benzoin isopropyl ether; and bis(2,4,6-trimethylbenzoyl)phenylphosphine oxide. Examples of commercially available acylphosphine compounds include IRGACURE 819 (BASF SE) and DAROCUR TPO (BASF SE). Among them, the acylphosphine compound is preferably IRGACURE 819 in view of a reduced amount of migration and surface curability of an ink.

### < α-Amino Ketone Compounds >

Examples of the α-amino ketone compounds include 2-benzyl-2-dimethylamino-1-(4-morpholinophenyl)butanone-1, 2-dimethylamino-2-(4-methylbenzyl)-1-(4-morpholin-4-ylphenyl)butan-1-one, and 2-methyl-1-(4-methylthiophenyl)-2-morpholinopropan-1-one. Examples of commercially available α-amino ketone compounds include IRGACURE 369 (from BASF SE) and IRGACURE 907 (from BASF SE). Among them, the α-amino ketone compound is preferably IRGACURE 369 in view of a reduced amount of migration and surface curability of an ink.

Examples of the hydrogen abstraction-type photoinitiators are as follows.

### < Benzophenone Compounds >

Examples of the benzophenone compounds include benzophenone, methyl o-benzoylbenzoate, 4-phenylbenzophenone, 4,4'-dichlorobenzophenone, hydroxybenzophenone, 4-benzoyl-4'-methyldiphenyl sulfide, an acrylated benzophenone, 3,3',4,4'-tetrakis(t-butylperoxycarbonyl)benzophenone, and 3,3'-dimethyl-4-methoxybenzophenone. Examples of commercially available benzophenone compounds include Omnipol BP (from Rahn AG), Speedcure BMS (from Lambson Limited), and Speedcure PBZ (from Lambson Limited).

### < Thioxanthone Compounds >

Examples of the thioxanthone compounds include 2-isopropylthioxanthone, 2,4-dimethylthioxanthone, 2,4-diethylthioxanthone, and 2,4-dichlorothioxanthone. Examples of commercially available thioxanthone compounds include Speedcure 7010 (from Lambson Limited), Speedcure CPTX (from Lambson Limited), and Speedcure ITX (from Lambson Limited).

Although depending on types or the like of actinic radiation and/or photocurable compounds, the content of the photoinitiator in the actinic radiation-curable inkjet ink of the present invention is preferably 0.01% by mass or more and 12% by mass or less, and more preferably 1.0% by mass or more and 10% by mass or less.

From a viewpoint of reducing the amount of migration, the content of the gelling agent is preferably 10% by mass or more and less than 75% by mass, based on the total mass of the photoinitiator having a photocurable group.

The actinic radiation-curable inkjet ink may contain a photoacid generator as a photoinitiator. Examples of the photoacid generators include compounds used for a chemically amplified photoresist and/or a photocationic polymerization (see pages 187 to 192 of Imejingu-you Yuki Zairyou (Organic Materials for Imaging), edited by The Japanese Research Association for Organic Electronics Materials, Bunshin-publishing, 1993).

### [Colorants]

The actinic radiation-curable inkjet ink of the present invention may further contain a colorant as needed. The colorant can be a dye or a pigment, and is preferably a pigment due to good dispersibility in ink components as well as excellent weatherability. The pigment can be, but not particularly limited to, organic pigments or inorganic pigments with the following Color Index Constitution Numbers, for example.

Examples of red or magenta pigments include Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, 257, Pigment Violet 3, 19, 23, 29, 30, 37, 50, 88, Pigment Orange 13, 16, 20, 36, and a mixture thereof. Examples of blue or cyan pigments include Pigment Blue 1, 15, 15:1, 15:2, 15:3, 15:4, 15:6, 16, 17:1, 22, 27, 28, 29, 36, 60, and a mixture thereof. Examples of green pigments include Pigment Green 7, 26, 36, 50, and a mixture thereof. Examples of yellow pigments include Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, 193, and a mixture thereof. Examples of black pigments include Pigment Black 7, 28, 26, and a mixture thereof.

Examples of commercially available pigments include Chromofine Yellow 2080, 5900, 5930, AF-1300, 2700L, Chromofine Orange 3700L, 6730, Chromofine Scarlet 6750, Chromofine Magenta 6880, 6886, 6891N, 6790, 6887, Chromofine Violet RE, Chromofine Red 6820, 6830, Chromofine Blue HS-3, 5187, 5108, 5197, 5085N, SR-5020, 5026, 5050, 4920, 4927, 4937, 4824, 4933GN-EP, 4940, 4973, 5205, 5208, 5214, 5221, 5000P, Chromofine Green 2GN, 2GO, 2G-550D, 5310, 5370, 6830, Chromofine Black A-1103, SEIKAFAST YELLOW 10GH, A-3, 2035, 2054, 2200, 2270, 2300, 2400(B), 2500, 2600, ZAY-260, 2700(B), 2770, SEIKAFAST RED 8040, C405(F), CA 120, LR-116, 1531B, 8060R, 1547, ZAW-262, 1537B, GY, 4R-4016, 3820, 3891, ZA-215, SEIKAFAST CARMINE 6B1476T-7, 1483LT, 3840, 3870, SEIKAFAST BORDEAUX 10B-430, SEIKALIGHT ROSE R40, SEIKALIGHT VIOLET B 800, 7805, SEIKAFAST MAROON 460N, SEIKAFAST ORANGE 900, 2900, SEIKALIGHT BLUE C 718, A 612, Cyanine Blue 4933M, 4933GN-EP, 4940, 4973 (from Dainichiseika Color & Chemicals Mfg. Co., Ltd.); KET Yellow 401, 402, 403, 404, 405, 406, 416, 424, KET Orange 501, KET Red 301, 302, 303, 304, 305, 306, 307, 308, 309, 310, 336, 337, 338, 346, KET Blue 101, 102, 103,104, 105, 106, 111, 118, 124, KET Green 201 (from Dainippon Ink & Chemicals Inc.); Colortex Yellow 301, 314, 315, 316, P-624, 314, U10GN, U3GN, UNN, UA-414, U263, Finecol Yellow T-13, T-05, Pigment Yellow 1705, Colortex Orange 202, Colortex Red 101, 103, 115, 116, D3B, P-625, 102, H-1024, 105C, UFN, UCN, UBN, U3BN, URN, UGN, UG276, U456, U457, 105C, USN, Colortex Maroon 601, Colortex Brown B610N, Colortex Violet 600, Pigment Red 122, Colortex Blue 516, 517, 518, 519, A818, P-908, 510, Colortex Green 402, 403, Colortex Black 702, U905 (from Sanyo Color Works, Ltd.); Lionol Yellow 1405G, Lionol Blue FG7330, FG7350, FG7400G, FG7405G, ES, ESP-S (from Toyo Ink Co., Ltd.); Toner Magenta E 02, Permanent Rubin F6B, Toner Yellow HG, Permanent Yellow GG-02, Hostaperm Blue B2G (from Hoechst AG); Novoperm P-HG, Hostaperm Pink E, Hostaperm Blue B2G (from Clariant); Carbon Black #2600, #2400, #2350, #2200, #1000, #990, #980, #970, #960, #950, #850, MCF 88, #750, #650, MA600, MA7, MA8, MA11, MA100, MA100R, MA77, #52, #50, #47, #45, #45L, #40, #33, #32, #30, #25, #20, #10, #5, #44, and CF9 (from Mitsubishi Chemical Corporation).

Pigments can be dispersed using, for example, a ball mill, a sand mill, an attritor, a roll mill, an agitator, a Henschel mixer, a colloid mill, an ultrasonic homogenizer, a pearl mill, a wet jet mill, or a paint shaker. Pigments are preferably dispersed so that pigment particles have a volume-average particle size of preferably 0.08 to 0.5 µm and a maximum particle size of preferably 0.3 to 10 µm, more preferably 0.3 to 3 µm. Dispersing of a pigment is adjusted, for example, by selection of a pigment, a dispersant, and a dispersion medium, dispersing conditions, and filtering conditions.

### [Pigment Dispersants]

The actinic radiation-curable inkjet ink of the present invention may contain a pigment dispersant. Incorporation of a pigment dispersant into the ink can enhance dispersibility of a pigment. The pigment dispersants more preferably include a comb-type block copolymer having a tertiary amine (hereinafter also simply referred to as "copolymer"). As used herein, the comb-type block copolymer refers to a copolymer composed of a linear polymer, which forms a main chain, graft-polymerized with different polymer(s) as side chains for every unit of the monomers constituting the main chain.

The content of the pigment dispersant is preferably, but not limited to, 2.0% by mass or more and 8.0% by mass or less. The content of the pigment dispersant is more preferably 2.0% by mass or more and 5.0% by mass% or less.

Examples of the pigment dispersants, other than the copolymer, may include a hydroxyl-containing carboxylic acid ester, a salt of a long-chain polyaminoamide and a high-molecular-weight acid ester, a high-molecular-weight polycarboxylic acid salt, a salt of a long-chain polyaminoamide and a polar acid ester, a high-molecular-weight unsaturated acid ester, a polymeric copolymerized product, a modified polyurethane, a modified polyacrylate, a polyether ester anionic surfactant, a naphthalenesulfonic acid-formalin condensate salt, an aromatic sulfonic acid-formalin condensate salt, a polyoxyethylene alkyl phosphate ester, polyoxyethylene nonyl phenyl ether, and stearylamine acetate. Examples of commercially available pigment dispersants include Solsperse series (from Avecia Limited) and PB series (from Ajinomoto Fine-Techno Co., Inc.).

The copolymer having a tertiary amine can strongly adsorb to acidic groups on a surface of a pigment due to increased electron density on the amine, which is a functional group with adsorbing properties to a pigment, and thus strong basicity exhibited. Accordingly, the copolymer of the present invention does not readily dissociate from a pigment even at about 85°C at which an inkjet ink is ejected. Further, by using a copolymer having a tertiary amine in the main chain as the copolymer of the present invention, the side chain becomes compatible with a photocurable compound and the pigment dispersant itself becomes readily dispersed, thereby improving dispersibility of a pigment, to which the pigment dispersant adsorbs.

A substituent on the amine is preferably, but not particularly limited to, a C₁ or C₂ alkyl group.

The copolymer is not particularly limited as long as it is a pigment dispersant that satisfies the above-mentioned conditions. Preferable examples of such pigment dispersants include BYK-2164, BYK-168, BYK N-22024 (from BYK-Chemie GmbH), BYK JET-9150, BYK JET-9151 (from ALTANA AG), EFKA 4310, EFKA 4320, EFKA 4401 (from BASF SE), Solsperse 39000 (from Avecia Limited), and Ajisper PB-821 (from Ajinomoto Fine-Techno Co., Inc.).

A secondary or a primary amine of a comb-type block copolymer may be converted to a tertiary amine by replacing hydrogen on the secondary or the primary amine with other substituents through a commonly known method. For example, a secondary amine or a primary amine of a comb-type block copolymer can be converted to an alkyl-substituted tertiary amine by reacting with an alcohol, such as decyl alcohol, in the presence of a reducing catalyst.

The actinic radiation-curable inkjet ink of the present invention may further contain a dispersion aid as needed. The dispersion aid may be selected corresponding to a pigment.

The total amount of a pigment dispersant and a dispersion aid is preferably 1 to 50% by mass, based on a pigment.

The actinic radiation-curable inkjet ink of the present invention may further contain a dispersion medium for dispersing a pigment as needed. A solvent may be contained in an ink as a dispersion medium, but the above-mentioned photocurable compound (especially, a monomer with a low viscosity) is preferably used as a dispersion medium in order to reduce residual solvent in images to be formed.

The dye can be an oil-soluble dye, for example. Examples of the oil-soluble dyes include various dyes below. Examples of magenta dyes include MS Magenta VP, MS Magenta HM-1450, MS Magenta HSo-147 (from Mitsui Toatsu Chemicals Inc.), AIZEN SOT Red-1, AIZEN SOT Red-2, AIZEN SOT Red-3, AIZEN SOT Pink-1, Spilon Red GEH special (from Hodogaya Chemical Co., Ltd.), RESOLIN Red FB 200%, Macrolex Red Violet R, Macrolex ROT5B (from Bayer Holding Ltd.), Kayaset Red B, Kayaset Red 130, Kayaset Red 802 (from Nippon Kayaku Co., Ltd.), Phloxine Rose Bengal, Acid Red (from Daiwa Dyestuff Mfg. Co., Ltd.), HSR-31, Diaresin Red K (from Mitsubishi Kasei Corporation), and Oil Red (from BASF Japan Ltd.).

Examples of cyan dyes include MS Cyan HM-1238, MS Cyan HSo-16, Cyan HSo-144, MS Cyan VPG (from Mitsui Toatsu Chemicals Inc.), AIZEN SOT Blue-4 (from Hodogaya Chemical Co., Ltd.), RESOLIN BR. Blue BGLN 200%, Macrolex Blue RR, CERES Blue GN, SIRIUS SUPRATURQ. Blue Z-BGL, SIRIUS SUPRATURQ. Blue FB-LL 330% (from Bayer Holding Ltd.), Kayaset Blue FR, Kayaset Blue N, Kayaset Blue 814, Turq. Blue GL-5 200, Light Blue BGL-5200 (from Nippon Kayaku Co., Ltd.), Daiwa Blue 7000, Oleosol Fast Blue GL (from Daiwa Dyestuff Mfg. Co., Ltd.), Diaresin Blue P (from Mitsubishi Kasei Corporation), Sudan Blue 670, Neopen Blue 808, and Zapon Blue 806 (from BASF Japan Ltd.).

Examples of yellow dyes include MS Yellow HSm-41, Yellow KX-7, Yellow EX-27 (from Mitsui Toatsu Chemicals Inc.), AIZEN SOT Yellow-1, AIZEN SOT Yellow-3, AIZEN SOT Yellow-6 (from Hodogaya Chemical Co., Ltd.), Macrolex Yellow 6G, Macrolex Fluor. Yellow 10GN (from Bayer Holding Ltd.), Kayaset Yellow SF-G, Kayaset Yellow 2G, Kayaset Yellow A-G, Kayaset Yellow E-G (from Nippon Kayaku Co., Ltd.), Daiwa Yellow 330HB (from Daiwa Dyestuff Mfg. Co., Ltd.), HSY-68 (from Mitsubishi Kasei Corporation), Sudan Yellow 146, and Neopen Yellow 075 (from BASF Japan Ltd.).

Examples of black dyes include MS Black VPC (from Mitsui Toatsu Chemicals Inc.), AIZEN SOT Black-1, AIZEN SOT Black-5 (from Hodogaya Chemical Co., Ltd.), RESOLIN Black GSN 200%, RESOLIN Black BS (from Bayer Holding Ltd.), Kayaset Black A-N (from Nippon Kayaku Co., Ltd.), Daiwa Black MSC (from Daiwa Dyestuff Mfg. Co., Ltd.), HSB-202 (from Mitsubishi Kasei Corporation), Neptune Black X60, and Neopen Black X58 (from BASF Japan Ltd.).

The content of the colorant is preferably 0.1 to 20% by mass, and more preferably 0.4 to 10% by mass, based on the total amount of an ink.

### [Other Components]

The actinic radiation-curable inkjet ink of the present invention may further contain a dispersion aid as needed. The dispersion aid may be selected corresponding to a pigment. The actinic radiation-curable inkjet ink of the present invention may further contain a dispersion medium for dispersing a pigment as needed. A solvent may be contained in an ink as a dispersion medium, but the dispersion medium is preferably a photocurable compound in order to reduce residual solvent in images to be formed.

The actinic radiation-curable inkjet ink of the present invention may further contain a photoinitiator auxiliary agent and/or a polymerization inhibitor, for example. The photoinitiator auxiliary agent may be a tertiary amine compound, and is preferably an aromatic tertiary amine compound. Examples of the aromatic tertiary amine compounds include N,N-dimethylaniline, N,N-diethylaniline, N,N-dimethyl-p-toluidine, ethyl p-N,N-dimethylaminobenzoate, isoamylethyl p-N,N-dimethylaminobenzoate, N,N-di(hydroxyethyl)aniline, triethylamine, and N,N-dimethylhexylamine. Among them, ethyl p-N,N-dimethylaminobenzoate and isoamylethyl p-N,N-dimethylaminobenzoate are preferred. Only one or two or more these compounds may be contained in an actinic radiation-curable inkjet ink.

Examples of the polymerization inhibitors include (alkyl)phenol, hydroquinone, catechol, resorcin, p-methoxyphenol, t-butylcatechol, t-butylhydroquinone, pyrogallol, 2,2-diphenyl-1-picrylhydrazyl, phenothiazine, p-benzoquinone, nitrosobenzene, 2,5-di-t-butyl-p-benzoquinone, bis(dithiobenzoyl) disulfide, picric acid, cupferron, N-nitrosophenylhydroxylamine aluminum salt, tri-p-nitrophenylmethyl, N-(3-oxyanilino-1,3-dimethylbutylidene)aniline oxide, dibutylcresol, cyclohexanone oxime cresol, guaiacol, o-isopropylphenol, butyraldehyde oxime, methyl ethyl ketone oxime, and cyclohexanone oxime.

The actinic radiation-curable inkjet ink of the present invention may further contain at least either an UV absorber or an antioxidant for enhancing weatherability of a cured article.

The UV absorber preferably has a long wave edge of the absorption wavelength of 410 nm or shorter, in view of light resistance and ozone resistance. The absorption wavelength of the UV absorber can be determined by measuring a UV-Vis absorption spectrum. The content of the UV absorber is preferably 2% by mass or less, more preferably 1% by mass or less, and further preferably 0.5% by mass or less, in view of curability. Meanwhile, the content of the UV absorber is preferably 0.1% by mass or more, from a viewpoint of absorbing UV irradiation and satisfactorily lowering photocatalytic action of an inorganic white pigment.

The content of the antioxidant is preferably 0.8% by mass or less, and more preferably 0.5% by mass or less, in view of curability. Meanwhile, the content of the antioxidant is preferably 0.05% by mass or more, from a viewpoint of scavenging radicals generated in a cured film of an ink and satisfactorily suppressing oxidation of a resin or the like.

In view of discharge stability and curability, the total amount of a UV absorber and an antioxidant is preferably 2.0% by mass or less, and more preferably 1.0% by mass or less, based on the total mass of an ink.

The actinic radiation-curable inkjet ink of the present invention may further contain components other than the above-mentioned ones as needed. Other components may be various additives and/or other resins, for example. Examples of the additives include a surfactant, a levelling additive, a matting agent, an IR absorber, an antimicrobial agent, and a basic compound for enhancing storage stability of an ink. Examples of the basic compounds include a basic alkali metal compound, basic alkaline earth metal compound, and a basic organic compound, such as an amine.

Examples of other resins include, for example, resins for adjusting physical properties of a cured film, such as a polyester resin, a polyurethane resin, a vinyl resin, an acrylic resin, and a rubber resin.

### [Preparation of Actinic Radiation-curable Inkjet Inks]

The actinic radiation-curable inkjet ink of the present invention can be obtained by mixing a photocurable compound, a photoinitiator, a gelling agent, and each optional component under heating. The resulting mixture is preferably filtered using a predetermined filter. In this step, a dispersion containing a pigment and a dispersant may be prepared in advance, and the rest components may be added into the dispersion and mixed while heating.

### [Physical Properties of Actinic Radiation-curable Inkjet Inks]

The actinic radiation-curable inkjet ink of the present invention, which contains a gelling agent, can undergo temperature-dependent reversible sol-gel phase transition. A sol-gel phase transition-type actinic radiation-curable ink is sol at a high temperature (about 80°C, for example) and thus can be discharged from an ink-discharge recording head, and becomes gel by spontaneous cooling after the impact on a recording medium. This can suppress coalescence of adjacent ink droplets and enhance image quality.

In order to enhance ejection properties of the actinic radiation-curable inkjet ink of the present invention, the viscosity of the ink is preferably a certain value or lower at a high temperature. Specifically, the viscosity of the ink at 80°C is preferably 3 mPa·s or higher and 20 mPa·s or lower, more preferably 6.0 mPa·s or higher and 15.0 mPa·s or lower, and further preferably 7.0 mPa·s or higher and 12.0 mPa·s or lower. Meanwhile, in order to suppress coalescence of adjacent ink droplets, the viscosity of the ink is preferably a certain value or higher at room temperature after the impact. Specifically, the viscosity of the actinic radiation-curable inkjet ink at 25°C is preferably 1000 mPa·s or higher.

The viscosity at 80°C, the viscosity at 25°C, and the gelation temperature of the actinic radiation-curable inkjet ink of the present invention can be determined by measuring dynamic viscoelasticity of the ink during temperature changes using a rheometer. Specifically, a temperature-dependent viscosity change curve is obtained by heating the ink to 100°C and then cooling to 25°C at a shear rate of 11.7 (1/s) and a temperature lowering rate of 0.1°C/s. The viscosity at 80°C and the viscosity at 25°C are determined by reading the respective viscosities at 80°C and 25°C in the temperature-dependent viscosity change curve. The gelation temperature is determined as a temperature at which the viscosity becomes 200 mPa·s in the temperature-dependent viscosity change curve.

A Physica MCR series stress-controlled rheometer (from Anton Paar GmbH) can be used as a rheometer. A diameter of the cone plate can be set to 75 mm and a cone angle can be set to 1.0°.

### (Inkjet Recording Method)

The inkjet recording method includes steps of 1) discharging the actinic radiation-curable inkjet ink of the present invention on a recording medium, and 2) irradiating the ink discharged on the recording medium with actinic radiation to cure the ink.

1) In the discharging step, the inkjet ink held in a discharge recording head may be discharged as droplets through nozzles toward a recording medium.
2) In the curing step, the ink impacted on the recording medium is irradiated with actinic radiation. Actinic radiation for irradiation may be appropriately selected corresponding to a type of photocurable compound, and can be UV rays or electron beams.

The conveying speed of the recording medium is preferably 30 m/min or faster and 120 m/min or slower, in view of high-speed recording.

### (Recording Media)

As recording media for printed articles, YUPO synthetic paper, various plastic for use in soft packaging, and films thereof can be used, in addition to common uncoated paper and coated paper, for example. Examples of various plastic films include a PP film, a PET film, an OPS film, an OPP film, an ONy film, a PVC film, a PE film, and a TAC film. Other plastic, such as a polycarbonate, an acrylic resin, ABS, a polyacetal, PVA, and a rubber can also be used. Alternatively, a metal or glass is also applicable. As a recording medium for use in food packaging, plastic is preferred, and polypropylene plastic is more preferred.

Ink droplets are attached to a recording medium by discharging the ink droplets from an inkjet recording head. In order to form high-quality images repeatedly and reproducibly, the temperature of a recording medium upon the impact of ink droplets is preferably set to 20°C or higher and 40°C or lower.

### (Inkjet Recording Apparatus)

An inkjet recording apparatus of an actinic radiation cure-type inkjet system, in which the actinic radiation-curable inkjet ink of the present invention is used, will be described. The inkjet recording apparatus of the actinic radiation cure-type inkjet system is classified into a line recording mode (single-pass recording mode) and a serial recording mode. Although the mode may be selected corresponding to required image resolution and/or recording speed, a line recording mode (single-pass recording mode) is preferred in view of high-speed recording.

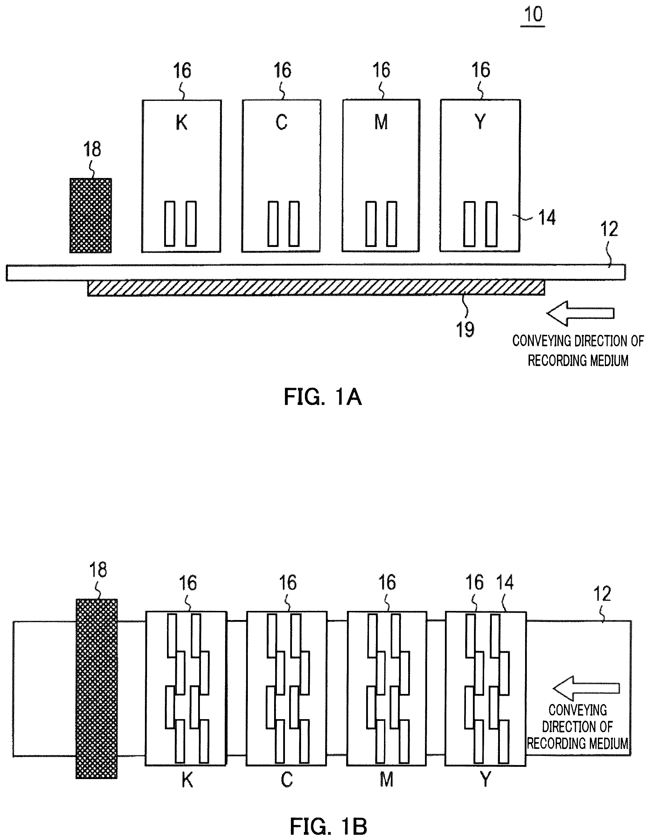

FIGS. 1A and 1B illustrate an example configuration of the main part of a line recording-mode inkjet recording apparatus. FIG. 1A is a side view and FIG. 1B is a top view. As illustrated in FIGS. 1A and 1B, inkjet recording apparatus 10 includes head carriages 16 that house a plurality of ink-discharge recording heads 14, actinic radiation irradiation section 18 that covers the entire width of recording medium 12 and is disposed on the downstream side (in the conveying direction of recording media) of head carriages 16, and temperature control section 19 that is disposed on the lower surface of recording medium 12.

Head carriages 16 are disposed and fixed to cover the entire width of recording medium 12, and house a plurality of ink-discharge recording heads 14, which are provided for respective colors. Inks are fed to discharge recording heads 14. For example, inks may be fed directly or through ink feeding units (not shown) from ink cartridges or the likes (not shown), which are detachably mounted on inkjet recording apparatus 10.

A plurality of discharge recording heads 14 are disposed for respective colors in the conveying direction of recording medium 12. The number of discharge recording heads 14 disposed in the conveying direction of recording medium 12 is set corresponding to a nozzle density of discharge recording heads 14 and a resolution of printing images. Dpi represents the number of ink droplets (dots) per 2.54 cm.

Actinic radiation irradiation section 18 covers the entire width of recording medium 12, and is disposed on the downstream side of head carriages 16 in the conveying direction of the recording medium. Actinic radiation irradiation section 18 irradiates droplets that have been discharged from ink-discharge recording heads 14 and impacted on a recording medium with actinic radiation so as to cure the droplets.

When actinic radiation is a UV ray, examples of actinic radiation irradiation sections 18 (UV irradiation means) include a fluorescent lamp (a low-pressure mercury lamp, a germicidal lamp), a cold cathode tube, a UV laser, low-, medium- and high-pressure mercury lamps with an operating pressure in a range of several hundreds Pa or higher to 1 MPa or lower, a metal halide lamp, and a LED. UV irradiation means with an irradiance of 100 mW/cm² or higher, specifically, a high-pressure mercury lamp, a metal halide lamp, and a LED are preferred in view of low power consumption and low radiant heat. Examples of UV-emitting LEDs include a 395 nm water-cooled LED (from Phoseon Technology).

When actinic radiation is an electron beam, examples of actinic radiation irradiation sections 18 (electron beam irradiation means) include a scanning-mode, a curtain beam-mode, and a broad beam-mode electron beam irradiation means, and a curtain beam-mode electron beam irradiation means is preferred in view of throughput. Examples of the electron beam irradiation means include "Curetron EBC-200-20-30" (from Nissin High Voltage Co., Ltd.) and "Min-EB" (from AI Technology, Inc.).

Temperature control section 19 is disposed on the lower surface of recording medium 12, and maintains recording medium 12 at a predetermined temperature. Temperature control section 19 can be various heaters, for example.

In the following, an image forming method using line recording-mode inkjet recording apparatus 10 will be described. Recording medium 12 is conveyed into between head carriages 16 and temperature control section 19 of inkjet recording apparatus 10. Meanwhile, recording medium 12 is adjusted to a predetermined temperature by temperature control section 19. Inks at a high temperature are then discharged from ink-discharge recording heads 14 of head carriages 16 and attached to (impacted on) recording medium 12. After that, ink droplets attached to recording medium 12 are irradiated with actinic radiation so as to cure by actinic radiation irradiation section 18.

During discharge of inks from ink-discharge recording heads 14, the temperature of the inks inside ink-discharge recording heads 14 is preferably set to a temperature 10°C to 30°C higher than the gelation temperature of the inks, from a viewpoint of enhancing dischargeability of the inks.

Although depending on the viscosity or the like of an ink, a volume of one droplet discharged from each nozzle of ink-discharge recording heads 14 is preferably 0.5 pL or more and 10 pL or less, more preferably 0.5 pL or more and 4.0 pL or less in order to discharge only in a desired region, and further preferably 1.5 pL or more and 4.0 pL or less. Since the ink of the present invention, even applied in such a volume, undergoes sol-gel phase transition, excessive spreading of the ink is prevented, and thus the ink can be discharged only in a desired portion.

Ink droplets attached to a recording medium immediately undergo gelation due to cooling and sol-gel phase transition. This enables pinning of the ink droplets without excessive spreading of the ink droplets. Further, due to immediate gelation of the ink droplets and increased viscosity, oxygen does not readily penetrate into the ink surface attached to the recording medium, and thus curing of the ink surface is less likely to be inhibited by oxygen.

Ink droplets are attached to the recording medium by discharging the ink droplets from ink-discharge recording heads 14. When the ink droplets are attached, the temperature of the recording medium is preferably set to a temperature of 10°C or higher and 20°C or lower than the gelation temperature of the ink.

In order to suppress coalescence of adjacent ink droplets, irradiation with actinic radiation is performed within 10 seconds, preferably 0.001 second to 5 seconds, and more preferably 0.01 second to 2 seconds after the ink droplets are attached to a recording medium. Irradiation with actinic radiation is preferably performed after inks held in head carriages 16 have been discharged from all of ink-discharge recording heads 14.

When actinic radiation is an electron beam, an accelerating voltage in electron beam irradiation is preferably 30 kV or higher and 250 kV or lower, and more preferably 30 kV or higher and 100 kV or lower in order to perform satisfactory curing. When an accelerating voltage is 100 kV or higher and 250 kV or lower, an irradiation dose of the electron beam is preferably 30 kGy or higher and 100 kGy or lower, and more preferably 30 kGy or higher and 60 kGy or lower.

The total ink film thickness after curing is preferably 2 µm or more and 25 µm or less. As used herein, "total ink film thickness" refers to a maximum value of an ink film thickness applied on a recording medium.

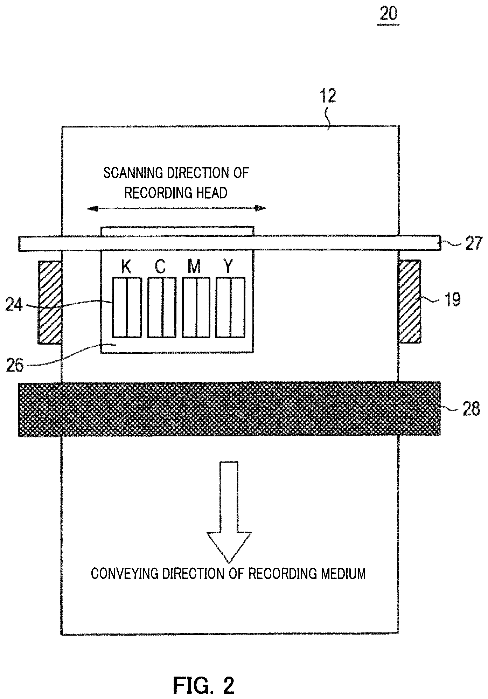

FIG. 2 is a top view illustrating an example configuration of the main part of serial recording-mode inkjet recording apparatus 20. As illustrated in FIG. 2, inkjet recording apparatus 20 can be configured in substantially the same manner as those shown in FIGS. 1A and 1B, except for including, in place of head carriages 16 that are disposed and fixed to cover the entire width of the recording medium, head carriage 26 that has a narrower width than the entire width of the recording medium and houses a plurality of ink-discharge recording heads 24, and guide section 27 for moving head carriage 26 in the width direction of recording medium 12.

Serial recording-mode inkjet recording apparatus 20 discharges inks from ink-discharge recording heads 24, which are housed in head carriage 26, while moving head carriage 26 along guide section 27 in the width direction of recording medium 12. Recording medium 12 is sent in the conveying direction after head carriage 26 has completed moving in the width direction of recording medium 12 (in every pass). Actinic radiation irradiation section 28 then irradiates ink droplets attached to recording medium 12 with actinic radiation so as to cure. Except for these operations, images are recorded in substantially the same manner as in the above-mentioned line recording-mode inkjet recording apparatus 10.

### Examples

Hereinafter, the present invention will be more specifically described with reference to the examples. Such description, however, shall not be construed as limiting the technical scope of the present invention.

### [Preparation of Magenta Pigment Dispersion]

According to the following procedure, a magenta pigment dispersion was prepared. Into a stainless steel beaker, 9% by mass of Solsperse 32000 (from BASF SE) and 71% by mass of Polyethylene Glycol #400 diacrylate (from Shin-Nakamura Chemical Co., Ltd.) as a polyfunctional photocurable compound were fed, and stirred for 1 hour while being heated on a hot plate at 65°C.

The resulting mixture was cooled to room temperature, and 20% by mass of Pigment Violet 19 (Fastogen Super Red BRZ, from DIC Corporation) as a pigment was added to the mixture. The resulting solution and 200 g of zirconia beads (diameter 0.5 mm) were together fed into a glass bottle, sealed, and subjected to dispersion treatment in a paint shaker for 5 hours. The zirconia beads were then removed to yield a magenta pigment dispersion.

### [Preparation of Inks]

In accordance with actinic radiation-curable inkjet ink components shown in the Tables below, the following respective components and the above pigment dispersion were mixed, heated to 80°C, and stirred. The resulting solutions were filtered through a Teflon (registered trademark) membrane filter (3 µm, from Advantec Group) under heating to yield ink samples 1 to 16. The unit of the components shown in the Tables is % by mass.

### [Gelling Agents]

Distearyl ketone (KAOWAX T1, from Kao Corporation, C18-C18)
Stearyl stearate (UNISTER M-9796: from NOF Corporation, C17-C18)
Stearamide (DIAMID Y: from Nippon Kasei Chemical Co., Ltd., C12)
Ethylene glycol distearate (EMALEX EG-di-S: from Nihon Emulsion Co., Ltd., C17-C17)

### [Photocurable Compounds]

(Monofunctional Photocurable Compound)
Isobornyl acrylate (IBXA: from Osaka Organic Chemical Industry, Ltd.)
(Polyfunctional Photocurable Compounds)
Tripropylene glycol diacrylate (M 220: from Toagosei Co. Ltd.)
Polyethylene Glycol #600 diacrylate (SR 610: from Sartomer)
6EO-modified trimethylolpropane triacrylate (SR 499: from Sartomer)
3PO-modified trimethylolpropane triacrylate (M 360: from Miwon Specialty Chemical Co., Ltd.)
Dipentaerythritol polyacrylate (A 9550: from Shin-Nakamura Chemical Co., Ltd.)

### [Photoinitiators]

### (Photoinitiators having Photocurable Group)

### < Acylphosphine Compounds >

Photoinitiators having photocurable groups A1 and A2 were synthesized by a well-known method, for example, in accordance with the description in paragraphs [0097] to [0099] in the Example section of PTL 1.

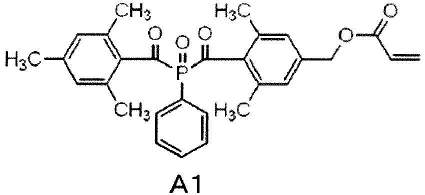

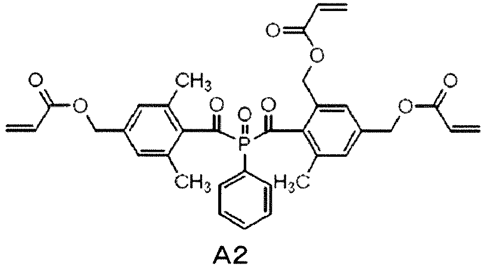

Photoinitiator having photocurable groups A3 was synthesized by a well-known method, for example, in accordance with the description of Example 4 in the Example section of PTL 3.

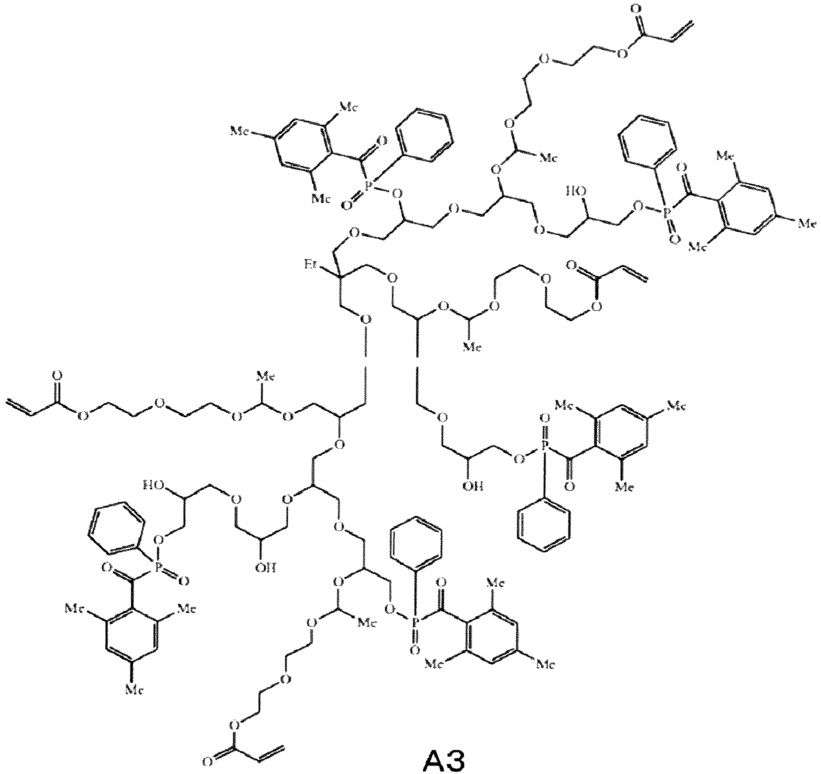

Photoinitiator having a photocurable group A4 was synthesized by a well-known method, for example, in accordance with the description in paragraphs [0099] to [0101] in the Example section of PTL 2.

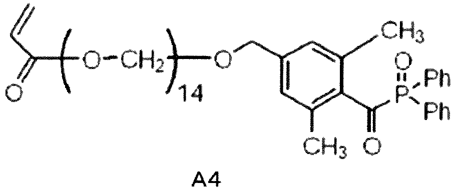

### < Thioxanthone Compounds >

Photoinitiator having photocurable groups A5 was synthesized by a well-known method, for example, in accordance with the description in paragraphs [0177] and [0178] in the Example section of PTL 4.

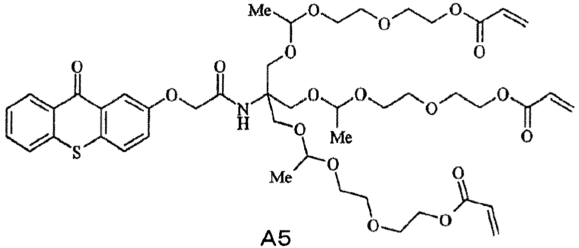

Photoinitiator having photocurable groups A6 was synthesized by a well-known method, for example, in accordance with the description in paragraphs [0179] and [0180] in the Example section of PTL 4.

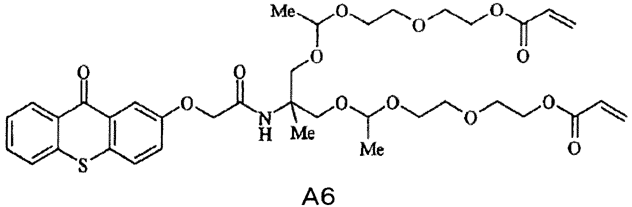

Photoinitiator having a photocurable group A7 was synthesized by a well-known method, for example, in accordance with the description on pages 35 and 36 of PTL 3.

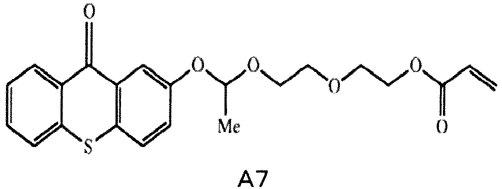

### < Benzophenone Compound >

Photoinitiator having photocurable groups A8 was synthesized by a well-known method, for example, in accordance with the description of Example 2 in the Example section of PTL 3.

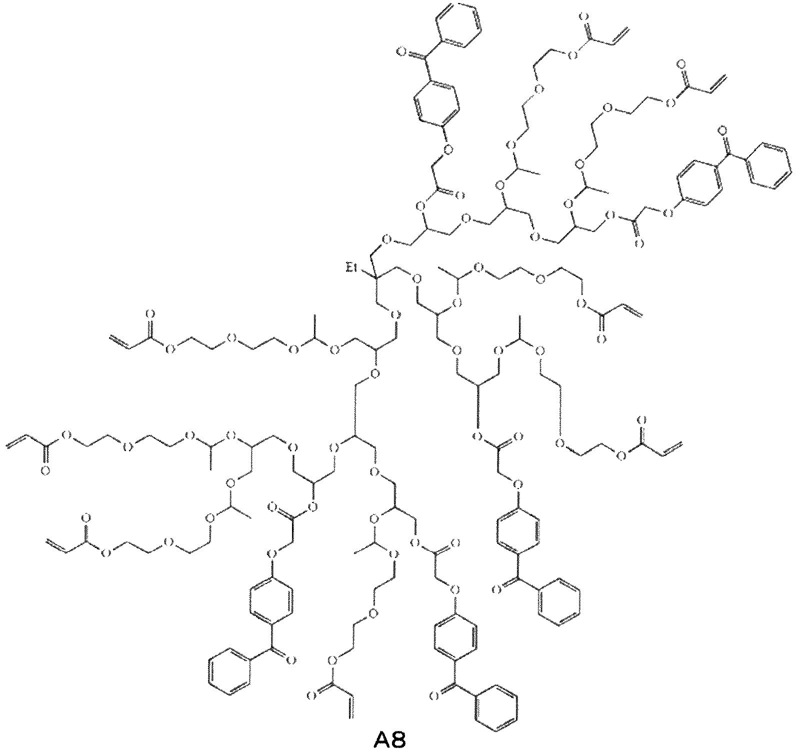

### (Other Photoinitiators)

### < α-Hydroxy Ketone Compound >

ESACURE KIP 150 (from Lamberti S.p.A.)

### < Acylphosphine Compound >

IRGACURE 819 (from BASF SE)

### < α-Amino Ketone Compound >

IRGACURE 369 (from BASF SE)

### < Thioxanthone Compound >

Speedcure ITX (from DKSH Management Ltd.)

### [Polymerization Inhibitor]

Irgastab UV 10 (from BASF SE)

### [Surfactant]

BYK 307 (from BYK-Chemie GmbH)

### [Inkjet Recording Method]

Solid images (100%) were printed using each ink sample shown in the Tables by disposing two piezo heads with a resolution of 600 dpi in the conveying direction and driving the piezo heads so as to have a recording resolution of 1200 × 1200 dpi and a droplet volume of 4pL.

### (Exposure Method)

While Film-OT P3162 (A4 size, polypropylene sheet, 40 µm) was moved at a rate of 30 m/min, the images were cured using a metal halide lamp (120 W/cm, from GS Yuasa International Ltd.) at a maximum irradiance on image surfaces of 280 mW/cm² and 400 mJ/cm² (measured with a 365 nm sensor UVPF-A1 from Iwasaki Electric Co., Ltd.) or using a 395 nm water-cooled LED lamp (from HOYA Corporation) at a maximum irradiance on image surfaces of 1 W/cm² and 400 mJ/cm² (measured with a 395 nm sensor UVPF-A1 from Iwasaki Electric Co., Ltd.).

### [Evaluation Method]

### (Evaluation of Amount of Migration)

In a metal container, a 10 dm²-cut printed article was set, and 10 mL mixture (water: ethanol = 5: 95) was added to immerse the printed article. The metal container was sealed to avoid vaporization of the mixture and left to stand at 60°C for 10 days. After that, the total amount of migration of each photocurable compound, initiator, and residue, such as the photoinitiator after the reaction, for example, from the printed article into the water/ethanol mixture was calculated, and evaluated in four categories. The total amount of migration was measured by evaporating the mixture after the standing for 10 days and measuring the mass of the residual components.
A: amount of migration of 50 ppb or less
B: amount of migration of more than 50 ppb and 200 ppb or less
C:amount of migration of more than 200 ppb and 1,000 ppb or less
D: amount of migration of more than 1,000 ppb

### (Surface Curability)

Surface curability was evaluated by visually observing the extent of color transfer after setting a 2cm²-cut printed article and scratching with a 2 cm²-cut coated printing paper under 800 g load in accordance with the method described in "JIS K 5701-1 6.2.3 wear resistance test." Also, surface curability was evaluated as surface tack of the printed article by touching the obtained solid images with fingers.
A: neither color transfer nor surface tack
B: minimal color transfer under close observation, but no surface tack
C: practicable to use despite slight color transfer and slight surface tack
D: impracticable to use due to surface tack and substantial color transfer

### (Surface Curability after Long-term Storage)

The same evaluation as above (surface curability) was performed after storage of inks at 40°C for 3 weeks.
A: neither color transfer nor surface tack
B: minimal color transfer under close observation, but no surface tack
C: practicable to use despite slight color transfer and slight surface tack
D: impracticable to use due to surface tack and substantial color transfer

Tables 2 to 4 show the evaluation results. In Tables 2 to 4, the column of "light source" represents either the above-mentioned LED or metal halide lamp used (In Tables 2 to 4, "metal halide lamp" is simply referred to as "metal halide").

**Table 2**

| Actinic Radiation-curable Inkjet Ink Component | | | Sample No. | | 1 | 2 | 3 | 4 | 5 |
|---|---|---|---|---|---|---|---|---|---|
| | | | | | Ex. | Ex. | Ex. | Ex. | Ex. |
| Pigment Dispersion (Magenta Dispersion) | | | | | 22.0 | 22.0 | 22.0 | 22.0 | 22.0 |
| Photocurable Compound | Monofunctional Photocurable Compound | | IBXA (Osaka Organic Chemical Industry, Ltd.) | | 5.0 | 5.0 | 5.0 | 5.0 | 5.0 |
| | Polyfunctional Photocurable Compound | | M 220 (Toagosei Co. Ltd.) | | 10.0 | 10.0 | 10.0 | 10.0 | 10.0 |
| | | | SR 610 (Sartomer) | | 12.0 | 12.0 | 12.0 | 12.0 | 12.0 |
| | | | SR 499 (Sartomer) | | 11.9 | 11.9 | 7.8 | 9.8 | 9.8 |
| | | | M 360 (Miwon Specialty Chemical Co., Ltd.) | | 25.0 | 25.0 | 25.0 | 25.0 | 25.0 |
| | | | A 9550 (Shin-Nakamura Chemical Co., Ltd.) | | 5.0 | 5.0 | 5.0 | 5.0 | 5.0 |
| Photoinitiator | Photoinitiator having Photocurable Group | | A1 (Acylphosphine Compound) | | 4.0 | | | | |
| | | | A2 (Acylphosphine Compound) | | | 4.0 | | | |
| | | | A3 (Acylphosphine Compound) | | | | 8.0 | | |
| | | | A4 (Acylphosphine Compound) | | | | | | |
| | | | A5 (Thioxanthone Compound) | | | | | 2.0 | |
| | | | A6 (Thioxanthone Compound) | | | | | | 2.0 |
| | | | A7 (Thioxanthone Compound) | | | | | | |
| | | | A8 (Benzophenone Compound) | | | | | | |
| | Other Photoinitiator | | IRGACURE 819 (BASF SE) | | | | | 4.0 | 4.0 |
| | | | IRGACURE 369 (BASF SE) | | | | | | |
| | | | ESACURE KIP 150 (Lamberti S.p.A.) | | | | | | |
| | | | Speedcure ITX (DKSH Management Ltd.) | | | | | | |
| Polymerization Inhibitor Irgastab UV 10 (BASF SE) | | | | | 0.1 | 0.1 | 0.1 | 0.1 | 0.1 |
| Surfactant | | | BYK 307 (BYK-Chemie GmbH) | | 0.05 | 0.05 | 0.05 | 0.05 | 0.05 |
| Gelling Agent | | Gelling Agent (G1) | KAOWAX T1 (Kao Corporation) | | | | | | |
| | | Gelling Agent (G2) | UNISTER M-9676 (NOF Corporation) | | | | | | |
| | | Other Gelling Agent | DIAMID Y (Nippon Kasei Chemical Co., Ltd.) | | 5.0 | 5.0 | 5.0 | | |
| | | | EMALEX EG-di-S (Nihon Emulsion Co., Ltd.) | | | | | 5.0 | 5.0 |
| Gelling Agent/Photoinitiator having Photocurable Group (% by mass) | | | | | 125.0 | 125.0 | 62.5 | 83.3 | 83.3 |
| Light Source | | | | | LED | LED | LED | LED | LED |
| Evaluation | | | | Migration | C | C | C | C | C |
| | | | | Surface Curability | B | B | B | A | A |
| | | | | Surface Curability after Storage | C | C | C | B | B |

**Table 3**

| Actinic Radiation-curable Inkjet Ink Component | | | Sample No. | | 6 | 7 | 8 | 9 | 10 |
|---|---|---|---|---|---|---|---|---|---|
| | | | | | Ex. | Ex. | Ex. | Ex. | Ex. |
| Pigment Dispersion (Magenta Dispersion) | | | | | 22.0 | 22.0 | 22.0 | 22.0 | 22.0 |
| Photocurable Compound | Monofunctional Photocurable Compound | | IBXA (Osaka Organic Chemical Industry, Ltd.) | | 5.0 | 5.0 | 5.0 | 5.0 | 5.0 |
| | Polyfunctional Photocurable Compound | | M 220 (Toagosei Co. Ltd.) | | 10.0 | 10.0 | 10.0 | 10.0 | 10.0 |
| | | | SR 610 (Sartomer) | | 12.0 | 12.0 | 12.0 | 12.0 | 12.0 |
| | | | SR 499 (Sartomer) | | 9.8 | 9.8 | 9.8 | 13.9 | 13.4 |
| | | | M 360 (Miwon Specialty Chemical Co., Ltd.) | | 25.0 | 25.0 | 25.0 | 25.0 | 25. |
| | | | A 9550 (Shin-Nakamura Chemical Co., Ltd.) | | 5.0 | 5.0 | 5.0 | 5.0 | 5.0 |
| Photoinitiator | Photoinitiator having Photocurable Group | | A1 (Acylphosphine Compound) | | | | 6.0 | 4.0 | 4.0 |
| | | | A2 (Acylphosphine Compound) | | | | | | |
| | | | A3 (Acylphosphine Compound) | | | | | | |
| | | | A4 (Acylphosphine Compound) | | | | | | |
| | | | A5 (Thioxanthone Compound) | | | 2.0 | | | 2.0 |
| | | | A6 (Thioxanthone Compound) | | | | | | |
| | | | A7 (Thioxanthone Compound) | | 2.0 | | | | |
| | | | A8 (Benzophenone Compound) | | | | 4.0 | | |
| | Other Photoinitiator | | IRGACURE 819 (BASF SE) | | 4.0 | | | | |
| | | | IRGACURE 369 (BASF SE) | | | 4.0 | | | |
| | | | ESACURE KIP 150 (Lamberti S.p.A.) | | | | | | |
| | | | Speedcure ITX (DKSH Management Ltd.) | | | | | | |
| Polymerization Inhibitor | | | Irgastab UV 10 (BASF SE) | | 0.1 | 0.1 | 01 | 0.1 | 0.1 |
| Surfactant | | | BYK 307 (BYK-Chemie GmbH) | | 0.05 | 0.05 | 0.05 | 0.05 | 0.05 |
| Gelling Agent | | Gelling Agent (G1) | KAOWAX T1 (Kao Corporation) | | | | | 3.0 | 1.5 |
| | | Gelling Agent (G2) | UNISTER M-9676 (NOF Corporation) | | | | | | |
| | | Other Gelling Agent | DIAMID Y (Nippon Kasei Chemical Co., Ltd.) | | | | 1.0 | | |
| | | | EMALEX EG-di-S (Nihon Emulsion Co., Ltd.) | | 5.0 | 5.0 | | | |
| Gelling Agent/Photoinitiator having Photocurable Group (% by mass) | | | | | 83.3 | 83.3 | 10.0 | 75.0 | 25.0 |
| Light Source | | | | | LED | LED | Metal Halide | LED | LED |
| Evaluation | | | | Migration | C | C | B | B | B |
| | | | | Surface Curability | A | A | A | A | A |
| | | | | Surface Curability after Storage | B | B | B | B | A |

**Table 4**

| Actinic Radiation-curable Inkjet Ink Component | | | Sample No. | | 11 | 12 | 13 | 14 | 15 | 16 |
|---|---|---|---|---|---|---|---|---|---|---|
| | | | | | Ex. | Ex. | Ex. | Comp. Ex. | Comp. Ex. | Comp. Ex. |
| Pigment Dispersion (Magenta Dispersion) | | | | | 22.0 | 22.0 | 22.0 | 22.0 | 22.0 | 22.0 |
| Photocurable Compound | Monofunctional Photocurable Compound | | IBXA (Osaka Organic Chemical Industry, Ltd.) | | 5.0 | | | | | |
| | Polyfunctional Photocurable Compound | | M 220 (Toagosei Co. Ltd.) | | 10.0 | 10.0 | 10.0 | 10.0 | 10.0 | 10/0 |
| | | | SR 610 (Sartomer) | | 12.0 | 12.0 | 12.0 | 12.0 | 12.0 | 12.0 |
| | | | SR 499 (Sartomer) | | 12.1 | 17.1 | 17.1 | 13.9 | 18.1 | 19.9 |
| | | | M 360 (Miwon Specialty Chemical Co., Ltd.) | | 25.0 | 25.0 | 25.0 | 25.0 | 25.0 | 25.0 |
| | | | A 9550 (Shin-Nakamura Chemical Co., Ltd.) | | 5.0 | 5.0 | 5.0 | 5.0 | 5.0 | 5.0 |
| Photoinitiator | Photoinitiator having Photocurable Group | | A1 (Acylphosphine Compound) | | 4.0 | | | 7.0 | | |
| | | | A2 (Acylphosphine Compound) | | | 4.0 | | | | 4.0 |
| | | | A3 (Acylphosphine Compound) | | | | | | | |
| | | | A4 (Acylphosphine Compound) | | | | 4.0 | | | |
| | | | A5 (Thioxanthone Compound) | | 2.0 | 2.0 | 2.0 | | | 2.0 |
| | | | A6 (Thioxanthone Compound) | | | | | | | |
| | | | A7 (Thioxanthone Compound) | | | | | | | |
| | | | A8 (Benzophenone Compound) | | | | | | | |
| | Other Photoinitiator | | IRGACURE 819 (BASF SE) | | | | | | 4.0 | |
| | | | IRGACURE 369 (BASF SE) | | | | | | | |
| | | | ESACURE KIP 150 (Lamberti S.p.A.) | | | | | 5.0 | | |
| | | | Speedcure ITX (DKSH Management Ltd.) | | | | | | 1.0 | |
| Polymerization Inhibitor | | | Irgastab UV 10 (BASF SE) | | 0.1 | 0.1 | 0.1 | 0.1 | 0.1 | 0.1 |
| Surfactant | | | BYK 307 (BYK-Chemie GmbH) | | 0.05 | 0.05 | 0.05 | 0.05 | 0.05 | 0.05 |
| Gelling Agent | | Gelling Agent (G1) | KAOWAX T1 (Kao Corporation) | | 1.8 | 1.8 | 1.8 | | 1.8 | |
| | | Gelling Agent (G2) | UNISTER M-9676 (NOF Corporation) | | 1.0 | 1.0 | 1.0 | | 1.0 | |
| | | Other Gelling Agent | DIAMID Y (Nippon Kasei Chemical Co., Ltd.) | | | | | | | |
| | | | EMALEX EG-di-S (Nihon Emulsion Co., Ltd.) | | | | | | | |
| Gelling Agent/Photoinitiator having Photocurable Group (% by mass) | | | | | 46.7 | 46.7 | 46.7 | 0.0 | 56.0 | 0.0 |
| Light Source | | | | | LED | LED | LED | Metal Halide | LED | LED |
| Evaluation | | | | Migration | B | A | A | D | D | D |
| | | | | Surface Curability | A | A | A | C | A | C |
| | | | | Surface Curability after Storage | A | A | A | D | A | D |

### Industrial Applicability

The actinic radiation-curable inkjet ink of the present invention that exhibits reduced amount of migration and good surface curability is suitable for an inkjet recording method on food packaging recording media, for example.

### Reference Signs List

- 10, 20: Inkjet recording apparatus
- 12: Recording medium
- 14, 24: Ink-discharge recording head
- 16, 26: Head carriage
- 18, 28: Actinic radiation irradiation section
- 19: Temperature control section
- 27: Guide section

## Claims

1. An actinic radiation-curable inkjet ink comprising a photocurable compound and a photoinitiator, wherein:
the photoinitiator includes a photoinitiator having a photocurable group; and
the actinic radiation-curable inkjet ink further comprises a gelling agent thereby undergoes sol-gel phase transition.

2. The actinic radiation-curable inkjet ink according to claim 1, wherein the photoinitiator having a photocurable group includes a thioxanthone compound or a benzophenone compound.

3. The actinic radiation-curable inkjet ink according to claim 1 or 2, wherein the gelling agent includes a compound represented by general formula G1 or a compound represented by general formula G2;
General Formula G1: R1-CO-R2
General Formula G2: R3-COO-R4
wherein R1, R2, R3, and R4 are each independently a hydrocarbon group containing a C₉₋₂₅ linear or branched portion.

4. The actinic radiation-curable inkjet ink according to any one of claims 1 to 3, wherein the photocurable compound substantially consists of a polyfunctional photocurable compound.

5. The actinic radiation-curable inkjet ink according to any one of claims 1 to 4, wherein a content of the gelling agent is 10% by mass or more and less than 75% by mass, based on the total mass of the photoinitiator having a photocurable group.

6. An inkjet recording method, wherein recording is performed using the actinic radiation-curable inkjet ink according to any one of claims 1 to 5.

## Patentansprüche

1. Mittels aktinischer Strahlung härtbare Tintenstrahltinte, welche eine photohärtbare Verbindung und einen Photoinitiator umfasst, wobei:
der Photoinitiator einen eine photohärtbare Gruppe aufweisenden Photoinitiator umfasst; und
die mittels aktinischer Strahlung härtbare Tintenstrahltinte weiterhin ein Geliermittel umfasst und auf diese Weise eine Sol-Gel-Phasenumwandlung vollzieht.

2. Mittels aktinischer Strahlung härtbare Tintenstrahltinte gemäß Anspruch 1, wobei der eine photohärtbare Gruppe aufweisende Photoinitiator eine Thioxanthonverbindung oder eine Benzophenonverbindung umfasst.

3. Mittels aktinischer Strahlung härtbare Tintenstrahltinte gemäß Anspruch 1 oder 2, wobei das Geliermittel eine durch die allgemeine Formel G1 dargestellte Verbindung oder eine durch die allgemeine Formel G2 dargestellte Verbindung umfasst;
allgemeine Formel G1 : R1-CO-R2
allgemeine Formel G2: R3-COO-R4
wobei R1, R2, R3 und R4 jeweils unabhängig für eine Kohlenwasserstoffgruppe stehen, welche einen linearen oder verzweigten C₉₋₂₅-Rest enthält.

4. Mittels aktinischer Strahlung härtbare Tintenstrahltinte gemäß einem der Ansprüche 1 bis 3, wobei die photohärtbare Verbindung im Wesentlichen aus einer polyfunktionellen photohärtbaren Verbindung besteht.

5. Mittels aktinischer Strahlung härtbare Tintenstrahltinte gemäß einem der Ansprüche 1 bis 4, wobei der Gehalt an Geliermittel 10 Masse% oder mehr und weniger als 75 Masse%, bezogen auf die Gesamtmasse des eine photohärtbare Gruppe aufweisenden Photoinitiators, beträgt.

6. Tintenstrahlaufzeichnungsverfahren, wobei die Aufzeichnung unter Verwendung der mittels aktinischer Strahlung härtbaren Tintenstrahltinte gemäß einem der Ansprüche 1 bis 5 erfolgt.

## Revendications

1. Encre pour jet d'encre durcissable par rayonnement actinique comprenant un composé photodurcissable et un photoinitiateur, dans laquelle :
le photoinitiateur comprend un photoinitiateur ayant un groupe photodurcissable ; et
l'encre pour jet d'encre durcissable par rayonnement actinique comprend en outre un agent gélifiant subissant ainsi une transition de phase sol-gel.

2. Encre pour jet d'encre durcissable par rayonnement actinique selon la revendication 1, dans laquelle le photoinitiateur ayant un groupe photodurcissable comprend un composé thioxanthone ou un composé benzophénone.

3. Encre pour jet d'encre durcissable par rayonnement actinique selon la revendication 1 ou 2, dans laquelle l'agent gélifiant comprend un composé représenté par la formule générale G1 ou un composé représenté par la formule générale G2 ;
Formule générale C1 : R1-CO-R2
Formule générale G2 : R3-COO-R4
dans lesquelles R1, R2, R3 et R4 sont chacun indépendamment un groupe hydrocarboné contenant une partie ramifiée ou linéaire en C₉₋₂₅.

4. Encre pour jet d'encre durcissable par rayonnement actinique selon l'une quelconque des revendications 1 à 3, dans laquelle le composé photodurcissable se compose essentiellement d'un composé photodurcissable polyfonctionnel.

5. Encre pour jet d'encre durcissable par rayonnement actinique selon l'une quelconque des revendications 1 à 4, dans laquelle une teneur en agent gélifiant est de 10 % en masse ou plus et inférieure à 75 % en masse, sur la base de la masse totale du photoinitiateur ayant un groupe photodurcissable.

6. Procédé d'impression par jet d'encre, dans lequel l'impression est réalisée en utilisant l'encre pour jet d'encre durcissable par rayonnement actinique selon l'une quelconque des revendications 1 à 5.
